# EUROPEAN PATENT SPECIFICATION

(11) **EP 1 311 777 B1**
(45) Date of publication and mention of the grant of the patent: **06.10.2010**
(21) Application number: 01950753.2
(22) Date of filing: 28.06.2001
(51) Int. Cl.: F16H 9/10, F16H 59/00, F16H 61/00, F16H 63/00, F16H 7/08

(54) **CONE WITH TORQUE TRANSMITTING SEGMENTS**
KONUS MIT DREHMOMENT-ÜBERTRAGUNGSSEGMENTEN
CONE A SEGMENTS DE TRANSMISSION DE COUPLE

(30) Priority: 24.07.2000 US 220532 P; 11.01.2001 US 758707
(43) Date of publication of application: 21.05.2003
(73) Proprietor: Tay, Armin S., West Covina, CA 91792 (US)
(72) Inventor: Tay, Armin S., West Covina, CA 91792 (US)
(74) Representative: Ackermann, Joachim
(86) International application number: PCT/US2001/020922
(87) International publication number: WO 2002/008638

(56) References cited:
- WO-A-91/00446
- DE-A1- 19 854 111
- FR-A- 1 177 149
- FR-A- 2 117 819
- US-A- 703 359
- US-A- 703 359
- US-A- 704 203
- US-A- 1 314 580
- US-A- 1 314 580
- US-A- 1 379 504
- US-A- 6 126 562
- US-A- 6 152 844

## Description

### BACKGROUND-FIELD OF INVENTION

This invention relates to a cone assembly for the construction of various continuously variable transmissions.

### BACKGROUND-DESCRIPTION OF PRIOR ART

In most applications the transmission ratio, which is the torque vs. speed ratio transmitted by a motor or engine, needs to be adjustable in order for the motor or engine to operate efficiently and effectively. For example, for a vehicle, during start-up, assuming that it is on a level road, the engine needs to provide torque to accelerate the vehicle and torque to overcome the resisting forces mainly due to friction and wind resistance, which is insignificant during start-up. Once the vehicle has reached its desired speed, again assuming that it is on level road, the engine only needs to provide torque to overcome the resisting forces, which in this case are likely to be greater than during start-up but less than the combined torque needed during start-up. Hence in this case the torque that the engine needs to provide is less than needed during start-up. However, here the engine needs to rotate the output shaft at a higher speed since the desired speed of the vehicle is assumed to be greater than the speed of the vehicle during start-up. From the example above it can be seen that during start-up, the engine needs to provide a relatively large torque and operate at a relatively low speed. And once the desired speed is reached, the engine needs to provide a relatively small torque and operate at a relatively high speed. Here a relatively large torque would be wasteful and makes the engine or motor inefficient. Hence in order to increase the efficiency of the motor or engine most vehicles have a transmission, which can vary the torque vs. speed ratio of the engine or motor.

Most vehicles, such as cars, bikes, or motorcycles use a discrete variable transmission. Here the operator can select between several discrete transmission ratios usually by selecting an input gear or sprocket to be coupled to an output gear or sprocket. The main advantage of a continuously variable transmission (CVT) over a discrete variable transmission is that a CVT can provide the engine or motor with a more efficient transmission ratio under most conditions.

It seems that CVTs are not extensively used because most CVTs need to use friction to transmit torque. The need of friction limits the torque that can be transmitted using a CVT. This is because materials have a strength limit and coefficient of friction limit. Also these devices are most likely less efficient than variable transmissions that use gears or timing belts because of slippage. And using a gearbox to reduce the torque that needs to be transmitted will increase the cost of the CVT and reduce the efficiency and reliability of the CVT. Furthermore, although the need of friction to transmit torque in continuously variable transmissions might be avoided by using intricate mechanisms, the efficiency of the mechanisms are most likely considerably less than that of gears, belts, or chains.

Since a cone is extensively used in CVTs, it seems that a cone would be an ideal device to use in a continuously variable transmission, if it was not for the need of friction to transmit torque between a cone and the coupling member.

Many attempts were made to increase the performance of CVTs, for example International Application WO 91/00446 by Cane comprising the features of the preamble of claim 1 shows a CVT that uses two cones. Each cone has a group of arms evenly spaced around its circumference. One end of the arms are mounted on a disk, which is positioned on the smaller end of its cone. On the other end of the arms, a channel shaped member that is shaped and oriented such that it can house a V "transmission belt" is mounted. The angle of the arms can be varied such that an expanding-contracting pulley is formed by its channel shaped members. The cones are then each mounted on separate shafts in a manner such that the apex of the cones point in opposite directions. A mechanism is then used to ensure that the channel shaped members of the cones are always properly aligned, and by coupling the channel shaped members of the cones with a V "transmission belt" a CVT is formed. A similar CVT to the CVT by Cane is the CVT shown in French Patent Application, Publication Number FR1177149, by Carrel, this CVT also has two cones, where each cone has sliders, which can house a transmission belt, mounted at even spaces around its circumference. The sliders are mounted such that they can be slid from the smaller end of their cone towards the larger end of their cone such that an expanding-contracting pulley is formed by the sliders. The cones are then each mounted on separate shafts in a manner such that the apex of the cones point in opposite directions. A mechanism is then used to ensure that the sliders of the cones are always properly aligned. And by coupling the sliders of the cones with a transmission belt, a CVT is formed. A similar CVT to the CVT of Carrel is the CVT shown in French Patent Application, Publication Number FR2117819, by Sorlano. This CVT also has two cones, where each cone has sliders, which can house a transmission belt, mounted at even spaces around its circumference. The sliders are mounted such that they can be slid from the smaller end of their cone towards the larger end of their cone such that an expanding-contracting pulley is formed by the sliders. The cones are then each mounted on separate shafts in a manner such that the apex of the cones point in opposite directions. A mechanism is then used to ensure that the sliders of the cones are always properly aligned, and by coupling the cones with a transmission belt a CVT is formed. Another CVT similar that is similar to the CVT of Cane is shown in U. S. Patent Number 1,379,504 by Young.

Another type of CVT which basic method of operation is similar to the CVT of Cane is shown in U.S. Patent number 1,314,580 of Dunbar. This CVT consists of two expanding-contracting pulleys, which torque transmitting surfaces can be described as an expanding-contracting circular surface, that are each mounted on separate shafts in a manner such that the apex of the expanding-contracting pulleys point in opposite directions. The expanding-contracting pulleys are then coupled by a belt such that a CVT is formed. A CVT similar to the CVT of Dunbar is shown in U.S. Patent Number 6,152,844 by Daugherty.

Another type of CVT which basic method of operation is also similar to the CVT of Cane is shown in US Patent Number 703,359 by White. This CVT consists of two cones that are each mounted on separate shafts in a manner such that the apex of the cones point in opposite directions. Placed on each cone is a compensating band. The compensating band is shaped such that it provides a level resting place for the belt that is used to couple the cones, such that twisting of the belt can be eliminated. A CVT similar to the CVT of White is shown in US Patent Number 704,203 by Moorhouse.

A tensioning ring that can be used to maintain the tension of a transmission belt in belt drives, including CVTs, is shown in US Patent 6,126,562 by Brangenfeldt.

A stageless gear that can be used to construct a different type of CVT from the ones discussed previously is shown in German Patent Application, Publication Number DE19854111 by Metzler. The stageless gear, which is coupled to another torque transmitting device by a chain, consists of four sprockets that are positioned 90 degrees from each other. The distance of each sprocket from the center of the stageless gear's shaft depends on a cam. The cam is shaped like an asymmetrical blunt cone. By changing the axial position of the cam, the distance of the sprocket that is used to pull the chain or is being pulled by the chain from the center of the stageless gear's shaft can be changed. This is used to change to transmission ratio of the CVT that uses a stagless gear. Despite its potential of providing a non-friction dependent CVT, here because of the shape of the cam, the distance of the sprockets from the center of the stageless gear's shaft change as the stageless gear is rotating; here the sprockets are moved towards and away from the center of the stageless gear's shaft as the stageless gear is rotating. This may causes the output speed of the CVT using the stageless gear to constantly vary even when at a constant transmission ratio; while in many applications a stable output speed at a given transmission ratio is desirable. Also, energy loses occur each time the sprockets are moved towards and away from the center of the stageless gear and this reduces the efficiency of the CVT.

### OBJECTIVS

Based on the state of the art the problem to be solved by the present invention is to provide a cone assembly for continuously variable transmissions with an improved mechanism for changing the diameter of a torque transmitting flexible member.

### SUMMARY

The problems described in the "Background-Description of Prior Art" Section can be solved by a cone assembly according to the features of claim 1.

### DRAWING FIGURES

In the drawings, closely related figures have the same number but different alphabetic suffixes.
Figs. 1A and 1B show the general configuration for the cone with a torque transmitting flexible member according to claim 1, where the torque transmitting flexible member is positioned at the larger end of the cone. Figs. 1C and 1D show the general configuration for the cone with a torque transmitting flexible member according to claim 1, where the torque transmitting flexible member is positioned at the smaller end of the cone. This cone is labeled as cone 26.
Figs. 2A, 2B, 2C, and 2D are drawings of a cone with two torque transmitting flexible members, which are placed opposite of each other. This cone is labeled as cone 26A.
Figs. 3A, 3B, 3C, and 3D are drawings of a cone with one torque transmitting flexible member and one non-toothed flexible member, which is placed opposite of the torque transmitting flexible member. This cone is labeled as cone 26B. In addition, Figs. 3A, 3B, 3C, and 3D also show a mover mechanism that will be used to move the torque transmitting flexible members and non-toothed flexible members attached on a cone in the axial direction.
Figs. 4A, 4B, 4C, and 4D are drawings of a cone with one torque transmitting flexible member according to claim 1, which at the smaller end of the cone covers less than half of the circumferential area of the cone. This cone is labeled as cone 26C.
Figs. 5A and 5B shows a CVT using two cones 26A. This CVT will be labeled as CVT1.
Fig 6A is a top-view a CVT that uses two cones 26B, which are coupled to two transmission pulleys. This CVT will be labeled as CVT2.
Fig 6B is a top-view a CVT that uses two cones 26C, which are coupled to two transmission pulleys. This CVT will also be labeled as CVT2.
Fig. 6C is a cross-sectional front view of CVT2 at the axial midpoint of a torque transmitting flexible member, which is positioned at the larger end of cone 26B.
Fig. 6D is a cross-sectional front view of CVT2 at the axial midpoint of a torque transmitting flexible member, which is positioned at the smaller end of cone 26B.
Fig. 6E shows a joiner mechanism that will be used to connect the slider bushings of the cones 26B. A slider bushings is used to move or maintain the axial position of one or several torque transmitting flexible members relative to the surface of its respective cone.

### Reference Numerals in Drawings

- 12: driver shaft
- 14: driven shaft
- 16: shaft
- 26: cone
- 26A: cone A
- 26B: cone B
- 26C: cone C
- 27: slot
- 28: inter-segment space
- 36: attachment sleeve
- 37: end cover
- 38: support sleeve
- 46: torque transmitting flexible member
- 46N: non-toothed flexible member
- 47: teeth
- 48: attachment plate
- 49: attachment wheel
- 51: attachment plate
- 52: pin-holed plate
- 54: locking collar
- 55: slider bushing
- 56: rotor
- 57: telescope
- 66: leveling loop
- 67: transmission belt
- 75: connector
- 75B: connector B
- 76: gear rack
- 77: gear
- 85: marked wheel
- 86: marked wheel decoder
- 96: slider joiner base
- 97: slider joiner rod
- 98: transmission pulley
- 99: spline sleeve
- 105: tensioning wheel
- 106: tensioning slider
- 107: tensioning constrainer
- 108: tensioning mover
- 109: tensioning actuator

### DESCRIPTION OF INVENTION-Preferred Embodiments

The inventor believes that there is no best method to utilize this invention. Here for some machines one variation, say variation A, works better than the other, say variation B, but the opposite is also true for some other machines. However, the inventor will clearly identify the advantages of one variation over the other.

Here first the basic idea of the invention will be presented in the General Cone Section. Then some alternate configurations, labeled as cone 26A, cone 26B, and cone 26C will be presented. Next, a mover mechanism for the invention will be described. Finally, a preferred configuration for a Continuously Variable Transmission (CVT) utilizing the invention according to claim 1 will be presented as CVT2.

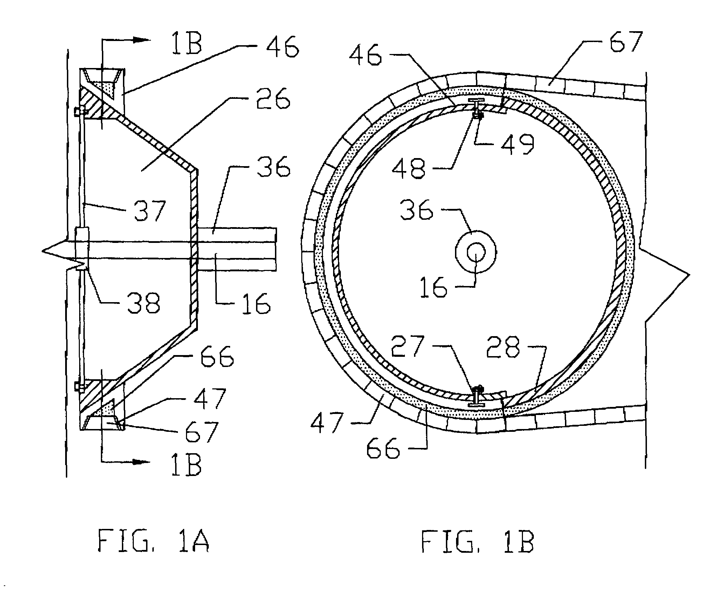

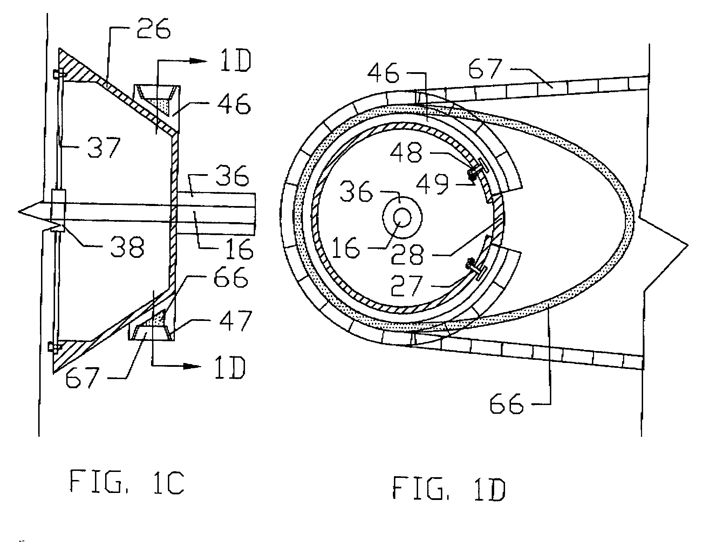

### General Cone (cone 26) - Figures 1A to 1D

The corner stone of the invention according to claim 1 is shown in Figures 1A to 1D. It consists of a cone 26, which is keyed to a shaft 16, to which one torque transmitting flexible member 46 or a group of torque transmitting flexible members 46 are attached. The torque transmitting flexible members 46 will be used to transmit torque from a transmission belt 67 to cone 26 without the need of friction. In Figures 1A to 1D, one torque transmitting flexible member, which consists of one continuous member is used. Having a group of torque transmitting flexible members attached on cone 26 so that they form one continuous segment on the cone 26 would also work.

The torque transmitting flexible member 46 is channel shaped, with two sides and a base. Here the bottom surface of the base of the torque transmitting flexible member 46 rests on the surface of the cone, and a leveling loop 66 rests on the top surface of the base of torque transmitting flexible member 46. The purpose of the leveling loop 66 is to provide a level-resting place for a transmission belt 67. The inner side surfaces of torque transmitting flexible member 46 have teeth 47, which will be used to transmit torque between a transmission belt 67 and cone 26. The torque transmitting flexible member 46 is preferably made out of steel reinforced rubber. In order prolong the life of the torque transmitting flexible member 46, and reduce the required force to slide the torque transmitting flexible member 46 to a different axial position on the surface of the cone 26, the bottom surface of the base of the torque transmitting flexible member should be PTFE coated. Furthermore, the torque transmitting flexible member 46 has one attachment plate 48 attached near its ends. The heads of the attachment plates 48 are preferably molded into the torque transmitting flexible member 46. The length of torque transmitting flexible member 46 can be varied according to the need of the CVT where the torque transmitting flexible member is utilized.

In order to attach the torque transmitting flexible member 46 to the cone 26, the cone 26 has two slots 27. Here the attachment plates 48 of the torque transmitting flexible member 46 are placed in the slots 27, and secured to cone 26 using an attachment wheel 49. The attachment wheels 49 are aligned so that they roll when the torque transmitting flexible member 46 is moved from one axial position on cone 26 to another. Furthermore, the attachment plates 48 can also be used to attach a mover mechanism, which will be described in the following sections, used to move the torque transmitting flexible member 46.

The torque transmitting flexible member 46 is attached on cone 26 so that it can only slide in the axial direction of the cone, which is the direction along the length of shaft 16. The arc length and hence pitch of the torque transmitting flexible member 46 remains constant regardless of its location on cone 26.

Furthermore, in order to prevent a coupling member such as a transmission belt 67 to deform as it comes in and out of contact with torque transmitting flexible member 46, the surface of cone 26 that will not be covered by torque transmitting flexible member 46, should be made flush with the top surface of the base of torque transmitting flexible member 46. Another method would be to eliminate the base of the torque transmitting flexible member entirely, so that the two side surfaces of torque transmitting flexible member 46 sit directly on the surface of the cone. This can be achieved by constructing torque transmitting flexible member 46 out of two side surfaces, which will be joined beneath the surface of cone 26. In order to reduce vibrations due to the centrifugal force of torque transmitting flexible member 46, the cone should be properly balanced.

The cones should be made out of die-cast stainless steel. And in order to obtain better dimensional tolerances and a smoother surface finish the cones obtained from the die-cast process should be machined. This invention does not relay on friction on the surface of the cone to transmit torque. And since it is also desirable to minimize the friction between the transmission belt and the surface of the cone, the surface of the cone should be PTFE coated. This will minimize the force necessary to change to the position of torque transmitting flexible member 46 on cone 26, and will extend the life of torque transmitting flexible member 46.

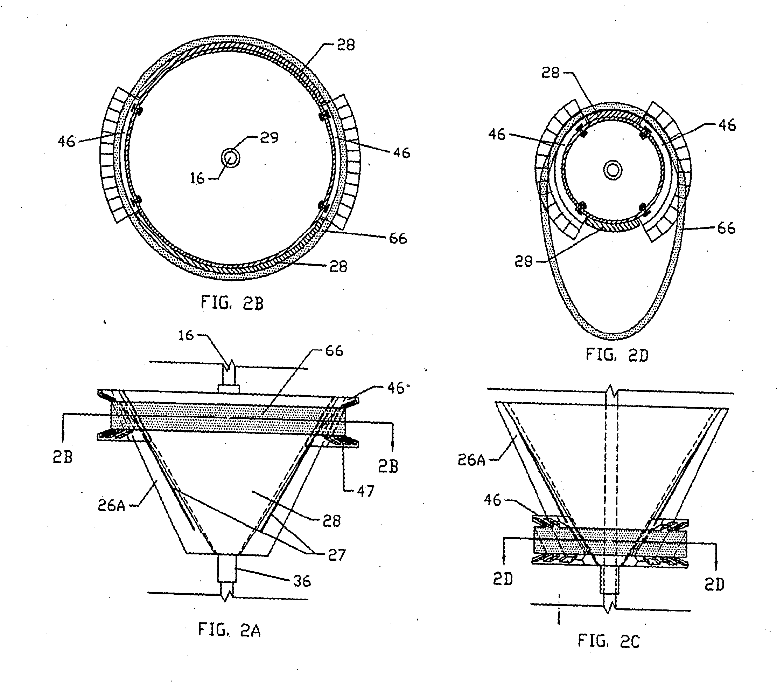

### Cone 26A-Figures 2A to 2D

Cone 26A is a cone described in this section. Cone 26A has two torque transmitting flexible members 46, which are attached opposite from each other on the surface of the cone. Furthermore, at the smallest end of cone 26A, each torque transmitting flexible member 46 covers less than half of the circumferential surface area of cone 26 at the axial section where the torque transmitting flexible members 46 are located. A space between the torque transmitting flexible members 46 will be referred to as an inter-segment space 28. Also, since cone 26A is symmetrical about its axis of rotation, there is no need to balance this cone.

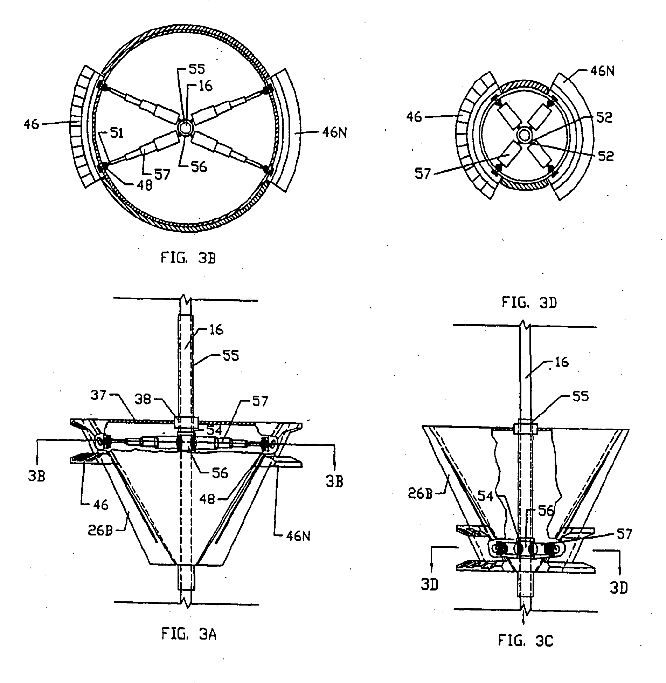

### Cone 26B-Figures 3A to 3D

The only difference between cone 26A and cone 26B is that for cone 26B, one torque transmitting flexible member 46 is replaced with a non-toothed flexible member 46N. The non-toothed flexible member 46N is identical to the torque transmitting flexible member 46 except that its inner side surfaces are not toothed, and its side surfaces are PTFE coated and shaped as not to transmit torque. The function of non-toothed flexible member 46N is to counterbalance the centrifugal force of torque transmitting flexible member 46 and contain the transmission belt 67 that will be used as a coupling member.

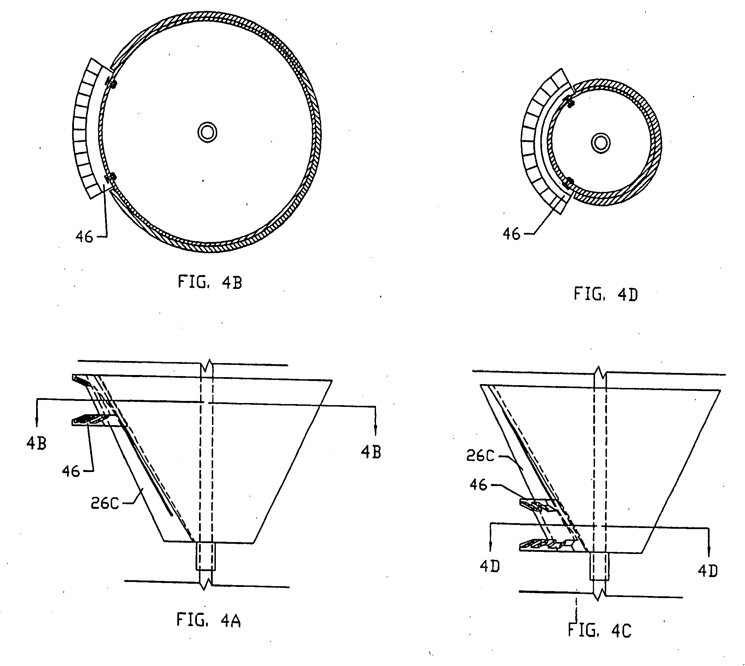

### Cone 26C-Figures 4A to 4D

Cone 26C, is a cone according to claim 1 with the restriction described in this section. Here, at the smaller end of cone 26C, the torque transmitting flexible member 46 covers less than half of the circumferential surface area of cone 26C at the axial location where the torque transmitting flexible member 46 is positioned. Like before, in order to reduce vibration due to the centrifugal force of the torque transmitting flexible member, the cone should be balanced.

### Mover Mechanism- Figures 3A to 3D

The torque transmitting flexible members 46 and the non-toothed flexible members 46N will be moved relative to the surface of the cone to which they are attached using a mover mechanism. Here the non-toothed flexible members 46N are attached to the mover mechanism in the same manner as the torque transmitting flexible members 46, for clarity the non-toothed flexible members 46N will not be referred to in this section.

The mover mechanism consists of a slider bushing 55, which is attached to a shaft in such a manner that it tightly fits onto the shaft but is free to slide along the length of the shaft. A rotor 56 is fitted onto slider bushing 55. A locking collar 54 will be used to fix the axial position of rotor 56 relative to slider bushing 55, however rotor 56 is free to rotate on slider bushing 55. In order to attach telescopes 57 to rotor 56, pin-holed plates 52 are attached to the outer surface of rotor 56. The telescopes 57 will be used to attach a torque transmitting flexible member 46 to rotor 56, so that the axial position of that torque transmitting flexible member 46 depends on the axial position of rotor 56. The length of telescopes 57 can vary so that they can connect the torque transmitting flexible member 46 to rotor 56 when the torque transmitting flexible member 46 is located at the smallest end of its cone 26A, 26B, 26C and at the largest end of its cone 26A, 26B, 26C. The bottom end of each telescope 57 has a two pin-holed plates 52, which will be used to join the bottom end of each telescope 57 to a pin-holed plate 52 on the rotor 56 using a bolt and nut or locking pin. The top end of each telescope 57 has an attachment plate 51, which is free to rotate only in the directions of the axis of rotation of cone 26A, 26B, 26C. The attachment plate 51 of a telescope 57 is joined to an attachment plate 48 of a torque transmitting flexible member 46 using a bolt and a nut or a locking pin. All parts discussed above are preferably made out of stainless steel, except the slider bushing 55, which is preferably made out of oil-impregnated bronze. Hence, using this mechanism the axial location of the torque transmitting flexible members 46 or the non-toothed flexible members 46N on the cones 26 and the cones 26A, 26B, 26C can be changed by changing the axial location of slider bushing 55.

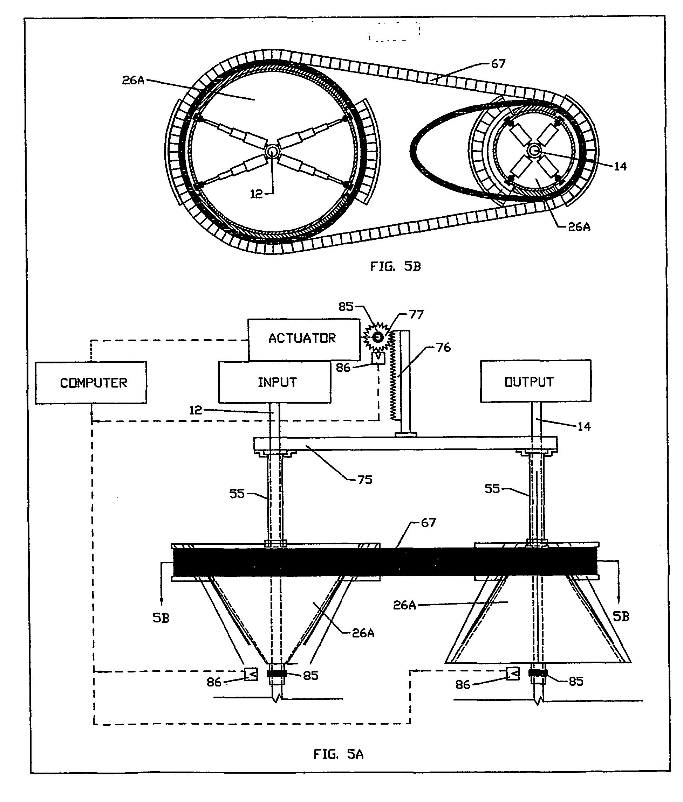

### Continuously Variable Transmission Variation 1 (CVT1)-Figures 5A to 5B

CVT1 consists of a pair of cones 26A, each equipped with a mover mechanism described in the previous section, that are coupled by a transmission belt 67. Here one cone 26A will be keyed to a driver shaft 12 and the other cone 26A will be keyed to a driven shaft 14. Torque between the cones 26A is transmitted via the transmission belt 67, which axial location is fixed relative to the torque transmitting flexible members 46. The transmission ratio depends on the location of the torque transmitting flexible members 46 on the surfaces of the cones 26A. Under this configuration, the length of transmission belt 67 should be perpendicular to the length of the driver shaft 12 and driven shaft 14. In order to achieve this, the slider bushing 55 on the driver shaft 12 and the slider bushing 55 on the driven shaft 14 are rigidly connected using a connector 75. In order to change the transmission ratio, an actuator, will be used to change the axial position of the connector 75, which in turn will change the axial location of transmission belt 67 on the cones 26A.

Under this configuration transmission belt 67 is only moveable when it is not in contact with one complete inter-segment space 28 of a cone 26A. This is because the arc length of an inter-segment space 28 changes as the axial location of the transmission belt 67 is changed. Hence changing the position of transmission belt 67 while it is in contact with a complete inter-segment space 28 will stretch the transmission belt 67.

In order to solve this problem, the actuator, is equipped with a spring-loaded piston. Here when the transmission belt 67 is in a moveable position, than the torque transmitting flexible members 46 will move with the actuator. However, when the transmission belt 67 is not in a moveable position then moving the actuator will not move the torque transmitting flexible members 46 but will stretch or compress the spring, until a limit switch on the spring-loaded piston is activated. And once both cones have rotated to a moveable position, than the tension or compression in the spring-loaded piston will move the transmission belt 67 in the direction the actuator was moved.

When the transmission belt 67 is in a position where the cone 26A on the driver shaft 12 rotates at the same speed as the cone 26A on the driven shaft 14. Then the transmission belt 67 can get stuck in a position where the transmission belt 67 is not moveable. One method to avoid this problem is to have a configuration where the smaller end of one cone 26A is slightly larger than the larger end of the other cone 26A. Under this configuration the cones 26A will never rotate at the same speed, so that the angular position of one cone 26A relative to the other cone 26A changes with the rotation of the cones 26A.

Another method to avoid having the transmission belt stuck in an unmovable position is to have a mover control system control the movement of the actuator. Here, every time the actuator is about to move the transmission belt 67 to a position where the transmission ratio between the cones 26A is unity, the mover control system will stop the actuator. Then the mover control system will wait until both cones 26A have moved to an angular position so that transmission belt 67 will be in a moveable position once the actuator moves it to the position where the transmission ratio between the cones 26A is unity. In order for this system to work the actuator needs to be fast enough so that the speed variation of the input shaft will not significantly affect the radial position of the torque transmitting flexible members 46 when they are being moved by the actuator. Here the mover control system consists of several sensors, a computer, and an actuator.

In order for the mover control system to determine the angular position and angular speed of the cones 26A, a marked wheel 85 is keyed to the driver shaft 12 and to driven shaft 14, and a marked wheel decoders 86 are attached to the frame of the CVT. Furthermore, in order to determine the axial locations of the torque transmitting flexible members 46, a gear rack 76 is attached so that it moves with the actuator, and a gear 77, which engages the gear rack 76 is attached to the frame of the CVT. A marked wheel 85 is attached to the gear, and a marked wheel decoder 86 decodes the information from this marked wheel 85. The information from the sensors above will be transmitted and processed by a computer, which will then use this information to properly move the actuator.

Since the mover control system can also be used to determine when the transmission belt 67 is in a moveable position, the spring-loaded piston is not needed for this design. Furthermore, when gear 77 is coupled to a rotary actuator it can be used as the actuator, which controls the axial position of the transmission belt 67 (Fig 5A).

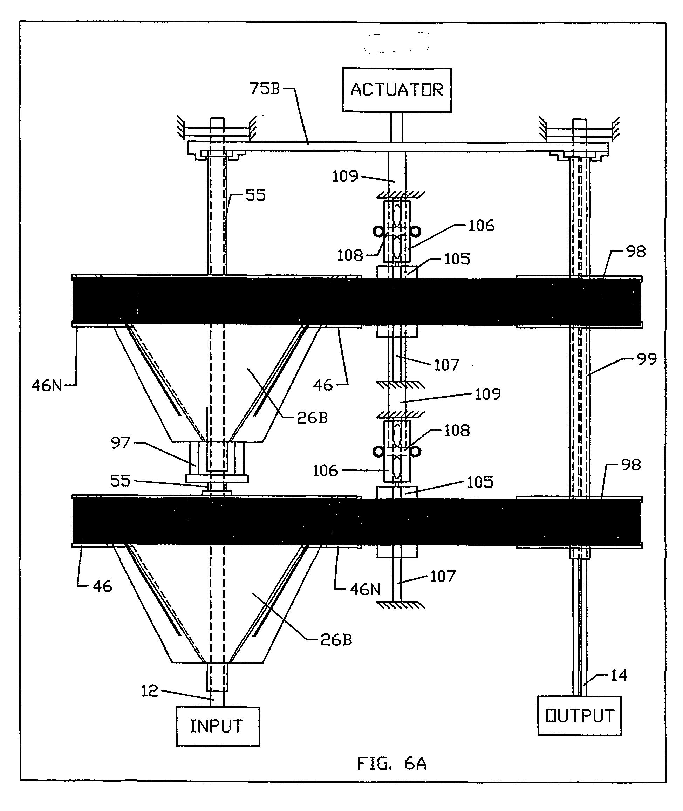

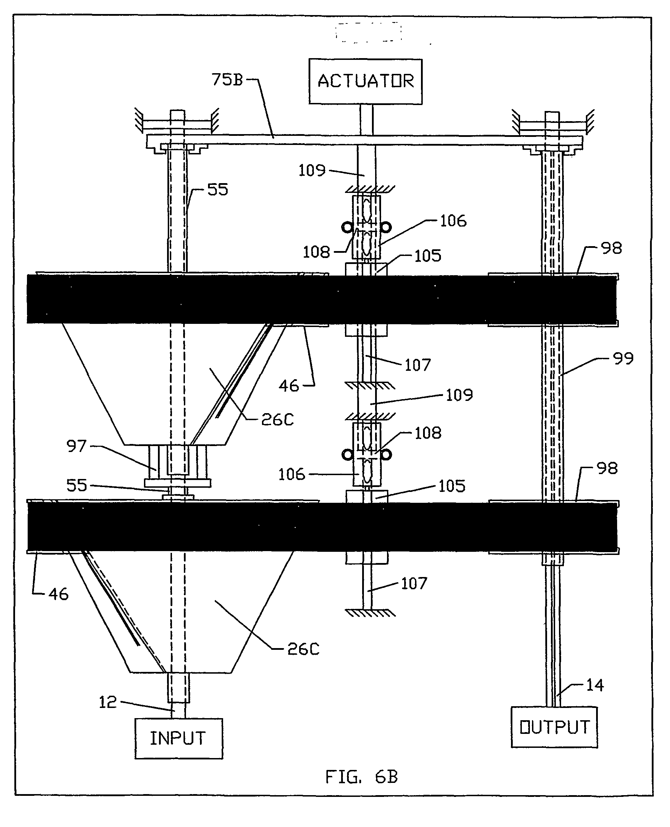

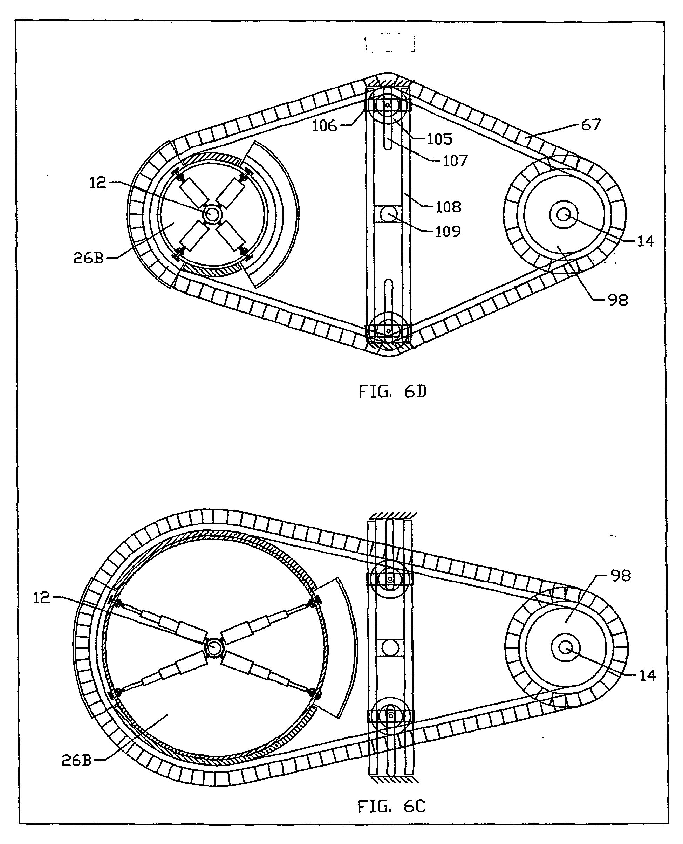

### Continuously Variable Transmission Variation 2 (CVT2)-Figures 6A to 6E

CVT2 consists of either two cones 26B, which are keyed to a driver shaft 12 so that the torque transmitting flexible member 46 of one cone 26B is opposite from the torque transmitting flexible member 46 of the other cone 26B, or two cones 26C, which are attached in the same manner. Each cone 26B, 26C is coupled to a transmission pulley 98 by a transmission belt 67. The transmission pulleys 98 are attached on the driven shaft 14.

In order to avoid having to use the leveling loop 66 for this CVT, the bottom surface of the base of each transmission belt 67 and the surface of each transmission pulley 98 has to be angled so that the entire bottom surface of each transmission belt 67 can rest on the surface its respective cone 26B, 26C and transmission pulley 98 without being twisted.

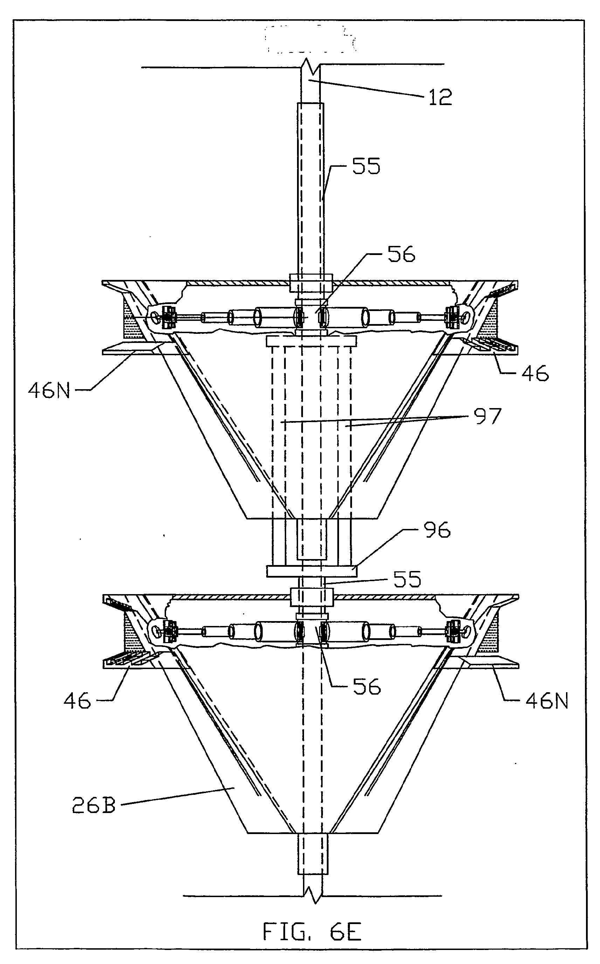

Here, the transmission ratio is controlled by controlling the axial location of the torque transmitting flexible members 46 relative to their respective cones using the mover mechanism described in the previous sections. In order to ensure that the axial location of the torque transmitting flexible members 46 relative to their respective cones 26B, 26C is identical, the slider bushing 55 of each cone 26B, 26C are rigidly connected using a slider joiner base 96 and slider joiner rods 97 (Fig 6E). The change in axial location of the torque transmitting flexible members 46 has to be accompanied by the change in axial location of the transmission pulleys 98. In order to achieve this, the transmission pulleys 98 are keyed to a spline sleeve 99, which is free to slide along the length of the driven shaft 14 but is not free to rotate relative to driven shaft 14.

Furthermore, the slider bushing 55 of the cone 26B, 26C located closes to an actuator, and the spline sleeve 99 are connected by a connector 75B so that the torque transmitting flexible members 46 are properly aligned with the transmission pulleys 98.

Furthermore, in order to avoid creating an excessive slack in the transmission belts 67 as they are moved from the larger ends of cones 26B, 26C to the smaller ends of cones 26B, 26C, each transmission belt 67 is equipped with a tensioning mechanism. The tensioning mechanism consists of two tensioning wheels 105, two tensioning sliders 106, two tensioning constrainers 107, a tensioning mover 108, and a tensioning actuator 109. The tensioning wheels 105 will be attached so that they touch the base of the transmission belts 67 at or near the midpoint between the driver shaft 12 and the driven shaft 14. Each tensioning wheel 105 is attached to a tensioning slider 106. Each tensioning slider 106 slides on a tensioning constrainer 107. Furthermore, in order to move a tensioning slider 106, each tensioning slider 106 has two vertical sleeves. Tensioning constrainer 107 is angled so that the tensioning wheels 105 will eliminate excessive slack in the transmission belts 67 as they are moved from the larger end of the cones 26B, 26C to the smaller ends of the cones 26B, 26C. Furthermore, the tensioning actuator 109 will be used to move the tensioning slider 106 and hence the tensioning wheels 105 with the transmission belts 67, when the transmission belts 67 are moved to a different axial position. The tensioning mover 108 consists mainly of two vertical guides, which move with the tensioning actuator 109. Here the vertical sleeves of the tensioning sliders 106 will slide on the vertical guides of the tensioning mover 108, so that the vertical movements of the tensioning sliders 106 will not be constricted by the movement of the tensioning actuator 109. Furthermore, tensioning wheels 105 should have smooth non-teethed side surfaces to maintain the alignment of the transmission belts 67, this is especially important if cones 26C are used.

The main advantage of CVT2 over CVT1 is that for CVT2 the surfaces of the transmission pulleys 98 can be made so that there is no need for the leveling loop 66. However, CVT2 needs two transmission belts 67 in order to operate properly, while CVT1 only needs one. This and the fact that CVT1 also needs two transmission pulleys 98 reduces the reliability of CVT2 and might increase the price of CVT2.

### ADVANTAGES

From the description above, a number of advantages of the cone according to claim 1 with a torque transmitting segment become evident:
(a) Compared to discrete transmission ratio transmissions, which are used in almost any high torque application, one or several cones according to claim 1 with a torque transmitting segment can be used to construct a CVT, which allows the engine or motor to perform more efficiently. This is because in most cases a CVT will be able to provide a more efficient transmission ratio than a discrete transmission ratio transmission.
(b) Compared to friction dependent CVTs, one or several cones according to claim 1 with a torque transmitting segment can be used to construct a CVT with higher torque capacity, higher efficiency, and longer life.

### OPERATION

In order to use one or several cones 26, the designer first determines the requirements and constraints of the CVT needed. From there he or she can construct a CVT using one or several cones 26 according to his or her need.

In order to use a CVT constructed out of one or several cones 26, such as CVT1 and CVT2, the operator first couples a motor or engine to the input shaft 12 of the CVT and couples the member to be driven to the output shaft 14 of the CVT. Next, in order to change the transmission ratio, which is achieved by changing the axial location of the transmission belt 67, he or she manually or automatically moves an actuator.

### CONCLUSION AND RAMIFICATION

Although the description above contains many specificities, these should not be construed as limiting the scope of the invention but as merely providing illustrations of some of the presently preferred embodiments of this invention. For example, a CVT can be constructed out of one cone 26A described above coupled to a timing pulley. Under this configuration only one cone 26A is needed, and the transmission belt 67 will never get stuck in an unmovable position. Also in order to reduce cost, a toothed torque transmitting flexible member 46 might be replaced with a non-toothed torque transmitting flexible member so that a V-belt can be used instead of a toothed transmission belt 67.

Furthermore by using a cone, which is identical to a cone 26 according to claim 1 and described in the general cone section, except for having a torque transmitting flexible member 46 with a square cross section instead of a channel shaped one, gears can be used to transmit torque from one or several said cones on a driver shaft to a driven shaft and vice-versa. For example, if the arc length of the torque transmitting flexible member 46 at the largest end of this cone is not less than half the circumference of the cone at that axial location, than a CVT can be constructed where two gears, which are attached so that they can engage with the teeth 47 of the torque transmitting flexible member 46, sandwich a said cone. Also a CVT, which consist of several of said cones, which engage directly with another of the cones can also be designed. The CVTs mentioned in this paragraph need additional parts to be workable. However given the time and need, a workable model for the designs mentioned in this paragraph as well as many other designs could be conceived. Here the concept of the cone with torque transmitting torque transmitting flexible members might be treated like a gear, which can be used to construct a device according to the specific requirements and constraints of the designer.

## Claims

1. A cone assembly for the construction of various continuously variable transmissions, comprising:
a) a cone (26) which is attached to a shaft (16) so that it can rotate along an axis of rotation, said axis of rotation passes through the center of the larger end of said cone (26) and the center of the smaller end of said cone (26),
b) a torque transmitting flexible member (46), which at an axial section of said cone (26) partially wraps around the surface of said cone (26) as to form a torque transmitting arc, said torque transmitting flexible member (46) is used for torque transmission to said cone assembly, said torque transmitting flexible member (46) is attached such that,
said torque transmitting flexible member (46) is fixed for rotation relative to said cone (26),
**characterised in that**,
said torque transmitting flexible member (46) is allowed to slide relative to said cone (26) in an axial direction, which is a direction along the length of said shaft (16),
sliding of said torque transmitting flexible member (46) relative to said cone (26) in said axial direction changes the diameter of said torque transmitting flexible member (46), which depends on the diameter of the surface of said cone where said torque transmitting flexible member (46) is positioned,
the arc length of said torque transmitting arc, formed by said torque transmitting flexible member (46), remains constant regardless of its location on said cone (26).

## Patentansprüche

1. Konusanordnung zur Herstellung verschiedener stufenloser Getriebe, umfassend:
a) einen Kegel (26), der an einer Welle (16) befestigt ist, so dass er sich entlang einer Drehachse drehen kann, wobei die Drehachse die Mitte des größeren Endes des Kegels (26) und die Mitte des kleineren Endes des Kegels (26) durchquert,
b) ein flexibles Drehmomentübertragungsglied (46), das an einem axialen Abschnitt des Kegels (26) die Fläche des Kegels (26) teilweise umwickelt, um einen Drehmomentübertragungsbogen zu bilden, wobei das flexible Drehmomentübertragungsglied (46) zur Drehmomentübertragung auf die Konusanordnung verwendet wird, wobei das flexible Drehmomentübertragungsglied (46) so befestigt ist, dass
das flexible Drehmomentübertragungsglied (46) drehfest bezüglich des Kegels (26) angebracht ist,
**dadurch gekennzeichnet, dass**
gestattet wird, dass das flexible Drehmomentübertragungsglied (46) bezüglich des Kegels (26) in einer Axialrichtung gleitet, wobei dies eine Richtung entlang der Länge der Welle (16) ist,
Gleiten des flexiblen Drehmomentübertragungsglieds (46) bezüglich des Kegels (26) in der Axialrichtung den Durchmesser des flexiblen Drehmomentübertragungsglieds (46) ändert, der von dem Durchmesser der Fläche des Kegels abhängig ist, wo das flexible Drehmomentübertragungsglied (46) positioniert ist,
die Bogenlänge des Drehmomentübertragungsbogens, die durch das flexible Drehmomentübertragungsglied (46) gebildet wird, unabhängig von ihrer Positionierung am Kegel (26) konstant bleibt.

## Revendications

1. Un assemblage de cône pour la construction de différentes transmissions à variation continue, comprenant :
a) un cône (26) qui est attaché à un arbre (16) de telle sorte qu'il peut tourner par rapport à un axe de rotation, ledit axe de rotation passant à travers le centre de l'extrémité la plus grande dudit cône (26) et le centre de l'extrémité la plus petite dudit cône (26),
b) un membre flexible de transmission de couple (46), qui, au niveau d'une section axiale dudit cône (26) s'entoure autour de la surface dudit cône (26) de manière à former un arc de transmission de couple, ledit membre flexible de transmission de couple (46) est utilisé pour la transmission du couple audit assemblage de cône, ledit membre flexible de transmission de couple (46) est fixé pour pouvoir tourner relativement audit cône (26), **caractérisé en ce que**
ledit membre flexible de transmission de couple (46) peut glisser relativement audit cône (26) dans une direction axiale, qui est une direction le long de la longueur dudit arbre (16),
le glissement dudit membre flexible de transmission de couple (46) relativement audit cône (26) dans ladite direction axiale modifie le diamètre dudit membre flexible de transmission de couple (46), qui dépend du diamètre de la surface dudit cône là où ledit membre flexible de transmission de couple (46) est positionné,
la longueur d'arc dudit arc de transmission de couple, formé par ledit membre flexible de transmission de couple (46) demeure constant indépendamment de sa position sur ledit cône (26).
